# FASCICULE DE BREVET EUROPEEN

(11) **EP 3 042 091 B1**
(45) Date de publication et mention de la délivrance du brevet: **14.04.2021**
(21) Numéro de dépôt: 14777701.5
(22) Date de dépôt: 03.09.2014
(51) Int. Cl.: F16B 39/02, B21K 1/70, B60B 1/04, F16B 39/284

(54) **ECROU FREINE EMBOUTI ET PROCEDE DE FABRICATION AFFERENT**
TIEFGEZOGENE BEFESTIGUNGSMUTTER UND ZUGEHÖRIGES HERSTELLUNGSVERFAHREN
DEEP-DRAWN LOCKNUT AND ASSOCIATED PRODUCTION METHOD

(30) Priorité: 04.09.2013 FR 1358481
(43) Date de publication de la demande: 13.07.2016
(73) Titulaire: Aaxces Ingenierie, 42350 La Talaudiere (FR)
(72) Inventeur: LACOUR, Denis, 42350 La Talaudiere (FR)
(74) Mandataire: Weber, Jean-François
(86) Numéro de dépôt international: PCT/FR2014/052181
(87) Numéro de publication internationale: WO 2015/033065

(56) Documents cités:
- EP-A1- 0 271 625
- EP-A1- 0 271 625
- EP-A1- 1 961 978
- EP-A1- 1 961 978
- WO-A1-2013/131564
- WO-A1-2013/131564
- DE-U1- 20 019 973
- DE-U1- 20 019 973
- US-A- 1 501 766
- US-A- 1 501 766
- US-A- 3 352 342
- US-A- 3 352 342
- US-A- 4 110 858

## Description

### DOMAINE TECHNIQUE

La présente invention se rapporte au domaine technique général des écrous taraudés et des systèmes de freinage utilisés sur des ensembles ou assemblages vis-écrous, et en particulier ceux utilisés notamment dans le domaine des cycles pour assurer la tension définitive des rayons de roues de bicyclettes montés par vissage à l'aide d'écrous taraudés sur la jante de la roue.

La présente invention concerne tout particulièrement un écrou pourvu d'un taraudage et d'un moyen de freinage pour assurer son freinage en position vissée sur le filetage d'une pièce, du genre vis. Selon cette disposition, le freinage a pour fonction d'assurer la position de blocage relatif de l'écrou et de la vis.

La présente invention concerne également un procédé de fabrication d'un écrou pourvu d'un taraudage ainsi qu'un procédé d'assemblage d'un écrou taraudé avec une pièce pourvue d'un filetage et que l'utilisation d'un tel écrou taraudé.

### TECHNIQUE ANTERIEURE

Il est bien évidemment déjà connu d'avoir recours à des écrous taraudés pour assurer la fixation de différentes pièces entre elles par vissage de l'écrou par son taraudage sur un filetage solidaire par exemple de la pièce à fixer ou d'une vis.

Pour améliorer et sécuriser la position des pièces de toute nature formant les assemblages de pièces obtenus par vissage du taraudage de l'écrou sur le filetage d'une seconde pièce, il est déjà connu d'avoir recours à des moyens de freinage susceptibles de garantir le blocage relatif de l'écrou et de son taraudage sur le filetage de la seconde pièce en vue d'éviter le desserrage inopiné des deux pièces au fil du temps. De tels moyens techniques de freinage sont communément appelés des « *freins filets* » et formés par des colles ou adhésifs réactifs, mono ou multicomposants, qui sont appliqués sur le taraudage et/ou sur le filetage pour s'opposer au desserrage des pièces sous contrainte. De telles applications sont d'application générale sur tous les éléments filetés mécaniques et concernent par exemple les pièces sous contrainte de vibrations telles que les vis de pompes ou de moteurs, les écrous de cache de culbuteurs, les vis de carter, les vis pour marteaux pneumatiques, les vis à tête fraisée et vis ajustées sur des colliers, sur des porte-outils, les vis pour appareils de commande divers etc. sans que cette liste soit limitative.

Ainsi, dans le domaine des cycles il est déjà connu de fixer et de tendre le rayon des roues de bicyclette s'étendant entre le noyau central et la jante de la roue par l'intermédiaire d'écrou de rayon de roue. L'écrou est pourvu d'un taraudage et est vissé, en général par une visseuse industrielle et sur une ligne de montage, sur le filetage de l'extrémité du rayon passant à travers un orifice de la jante. La fixation et le blocage homogènes des rayons d'une roue est une opération primordiale car c'est la tension des rayons d'une roue qui garantit le maintien de la géométrie et de la rigidité de la roue de la bicyclette. Il est en effet particulièrement important de garantir et de maintenir une tension constante au niveau de la tension de chaque rayon afin d'éviter la distension du rayon et la perte de géométrie et de rigidité de la roue. Or il s'avère que sous une contrainte de tension normale du rayon, correspondant par exemple à une bicyclette à l'arrêt et soumise à son seul poids sans être soumise à une contrainte de poids en rotation, la tête de l'écrou est en contact avec la jante en exerçant une certaine pression qui est identique à tous les écrous d'une même roue.. Lorsque la roue est en rotation et soumise à la contrainte supplémentaire du poids du cycliste, les contraintes subies par chaque rayon à un instant « *t »* sont extrêmement variables. En effet lorsque le cycliste est en place sur la bicyclette, il exerce par son poids, des contraintes sur chaque rayon et sur la liaison tête d'écrou *l* jante qui sont différentes, même si la bicyclette est à l'arrêt. En phase dynamique, correspondant au roulement de la bicyclette, les différences de contraintes sont encore plus importantes d'un rayon à un autre, le phénomène étant même aggravé dans les virages ou lors de chocs survenant au passage d'un obstacle, du genre trou ou trottoir, voire saut lorsqu'il s'agit d'une bicyclette de type VTT. En effet, en phase dynamique, un rayon de roue passe constamment d'une phase de surtension à une phase de sous-tension à chaque tour de roue, correspondant respectivement à un flambage de chaque rayon lorsqu'il est perpendiculaire au sol, ou à un état d'extension lorsqu'il est sensiblement parallèle au sol. Pendant la phase de sous-tension l'écrou a tendance à être très légèrement décollé de la jante, alors que pendant les phases de surtension, il a au contraire tendance à être soumis à une très légère contrainte de plaquage contre ladite jante. Sous l'effet combiné des vibrations, toutes les contraintes subies par l'écrou ont tendance à entraîner une rotation imperceptible de l'écrou par rapport au rayon de telle sorte qu'au fil du temps, et des rotations de la roue, on constate un desserrage progressif de l'écrou. Si aucun moyen de freinage n'est prévu, on observe rapidement une distension du rayon et une perte de géométrie et de rigidité globale de la roue conduisant à une détérioration des performances et à plus ou moins long terme au voilage de la roue ou à son gauchissement.

Pour résoudre ce problème connu, il a déjà été proposé de réaliser des écrous de type freinés par application de colle ou de frein filet, soit sur le taraudage de l'écrou, soit sur le filetage du rayon de la roue soit encore sur les deux pièces.

Il est en particulier déjà connu d'appliquer de la colle sur les taraudages des écrous destinés à être vissés sur les rayons de roues de bicyclette de manière à obtenir des écrous préenduits. Les écrous préenduits de colle sont ensuite vissés à l'aide de visseuses dont l'embout est équipé d'une aiguille qui vient prendre l'écrou par son intérieur. Cette aiguille est télescopique et se rétracte dans l'embout de visseuse au moment du vissage de l'écrou sur le rayon des roues de bicyclette. Cette aiguille se charge inévitablement de colle à chaque opération de montage d'un écrou et à la longue, et par exemple au bout de plusieurs milliers d'écrous posés, l'aiguille a emporté suffisamment de colle arrachée à la multitude d'écrous vissés pour mettre en défaut le mécanisme même de la visseuse. Le chargement de colle sur l'aiguille rétractable entraîne la mise en défaut de la visseuse et perturbe le processus même de pose et de vissage, occasionnant des pannes et des arrêts de production intempestifs. Dans de telles situations, le freinage de l'écrou n'est par ailleurs pas totalement performant et peut nécessiter des resserrages au cours de la vie de la jante. Ces procédés et dispositifs connus ne présentent par conséquent pas une solution fiable sur le plan industriel et économique.

Cette opération est donc difficile à mettre en oeuvre ou mal maîtrisée à ce jour, au moins dans les applications visant à automatiser le vissage d'écrous pourvus de freins filets sur des rayons de roues de bicyclettes.

Au demeurant, il s'avère que le freinage des écrous de rayons de roues sur les rayons des roues de bicyclettes n'est pas non plus totalement performant et nécessite souvent des resserrages au cours de la vie de la jante.

On connaît également les écrous de type freiné par bague nylon rapportée, de tels écrous présentant certes une bonne qualité de freinage, mais étant d'un coût de fabrication élevé de telle sorte que ce type de solution technique n'est pas répandu et réservé à certaines utilisations bien précises.

Le document antérieur DE-20019973 décrit un raccord à vis pour un rayon de roue, constitué principalement d'un corps formé par un tronc, le corps étant muni d'une ouverture axiale comprenant un filet de vis interne.

### EXPOSE DE L'INVENTION

Les objets assignés à l'invention visent par conséquent à porter remède aux différents inconvénients mentionnés précédemment et à proposer un nouvel écrou taraudé, ainsi qu'un nouveau procédé et une nouvelle installation de fabrication d'un écrou taraudé ainsi qu'un nouveau procédé d'assemblage d'un écrou taraudé avec une pièce pourvue d'un filetage qui soient particulièrement simple à réaliser et mettre en œuvre tout en étant particulièrement efficace et à faible coût.

Un autre objet de l'invention vise à proposer un nouvel écrou taraudé, un nouveau procédé et une nouvelle installation de fabrication d'un écrou taraudé ainsi qu'un nouveau procédé d'assemblage qui soient de fabrication et d'assemblage simples tout en pouvant être appliqués dans différents domaines techniques.

Un autre objet de l'invention vise à proposer un nouvel écrou taraudé, ainsi qu'un nouveau procédé et une nouvelle installation de fabrication et d'assemblage qui puissent être mis en œuvre sur le plan industriel d'une manière extrêmement simple et économique.

Un autre objet de l'invention vise à proposer un nouvel écrou taraudé, ainsi qu'un nouveau procédé de fabrication et un nouveau procédé d'assemblage qui puissent être mis en œuvre à l'aide de moyens industriels particulièrement simples.

Les objets assignés à l'invention visent également à proposer une nouvelle utilisation d'un écrou taraudé qui soit particulièrement universelle, simple et économique à mettre en œuvre.

La présente divulgation concerne également une nouvelle installation de fabrication d'un écrou taraudé qui soit particulièrement facile à mettre en œuvre en utilisant des moyens techniques simples, éprouvés et robustes.

Les objets assignés à l'invention sont atteints à l'aide d'un nouvel écrou selon la revendication 1.

Les objets assignés à l'invention sont atteints à l'aide d'un procédé de fabrication d'un écrou selon la revendication 7.

Les objets assignés à l'invention sont atteints à l'aide d'un procédé d'assemblage d'un écrou selon la revendication 12.

Les objets assignés à l'invention sont atteints à l'aide d'une utilisation d'un écrou selon la revendication 14.

La présente divulgation concerne en outre une installation de fabrication d'un écrou.

### DESCRIPTIF SOMMAIRE DES DESSINS

D'autres objets et avantages de l'invention apparaîtront mieux à la lecture de la description qui suit, ainsi qu'à l'aide des dessins annexés, donnés à titre purement illustratif et non limitatif, dans lesquels :
- La figure 1 illustre, selon une vue générale en perspective, un écrou taraudé conforme à l'invention.
- La figure 2 illustre, selon une vue de dessus, un écrou taraudé conforme à l'invention et identique à celui de la figure 1.
- La figure 3 illustre, selon une vue en coupe transversale longitudinale, un écrou taraudé conforme à l'invention et identique à celui illustré aux figures 1 et 2.
- La figure 4 illustre, selon une section transversale effectuée selon la ligne IV-IV de la figure 3, un écrou taraudé conforme à l'invention.
- La figure 5 illustre un détail de réalisation de la déformation localisée de l'écrou taraudé conforme à l'invention.
- La figure 6 illustre, selon une vue en section transversale longitudinale de l'écrou et d'un organe d'emboutissage, l'étape finale d'emboutissage du procédé de fabrication selon l'invention.
- La figure 7 illustre, selon une vue schématique selon une section transversale longitudinale, un écrou taraudé selon l'invention avant d'être vissé sur l'extrémité d'un filetage d'un rayon de roue de bicyclette.
- La figure 8 illustre, selon une vue en section transversale longitudinale, un écrou taraudé conforme à l'invention après vissage et freinage sur le filetage du rayon de bicyclette illustré à la figure 7.
- Les figures 9 et 10 illustrent, selon des vues schématiques, respectivement d'une part selon une coupe transversale partielle et de côté, et d'autre part de dessus, un exemple de réalisation d'une installation de fabrication d'un écrou taraudé.

### MEILLEURE MANIERE DE REALISER L'INVENTION

Dans la description qui suit, il sera plus particulièrement fait référence à un écrou 1 pourvu d'un taraudage 2, ledit écrou comportant une tête 3 surmontant un fût 6 sensiblement cylindrique. La tête 3 présente avantageusement une fente 4 ménagée radialement dans ladite tête 3, l'écrou 1 étant pourvu intérieurement d'un puits traversant 5 s'étendant axialement d'une extrémité à l'autre de l'écrou 1 sur toute sa longueur selon l'axe de révolution X-X' dudit écrou 1.

Tel qu'illustré, et de manière purement illustrative, et nullement limitative, le taraudage 2 ne s'étend sur les parois du puits traversant 5 que partiellement, et avantageusement uniquement sur la partie supérieure de l'écrou 1, y compris au niveau de la tête 3 sur les faces de la fente 4 tout en laissant la partie inférieure 7 du fût 6 dépourvue de taraudage pour former une zone inférieure 8 dépourvue de taraudage.

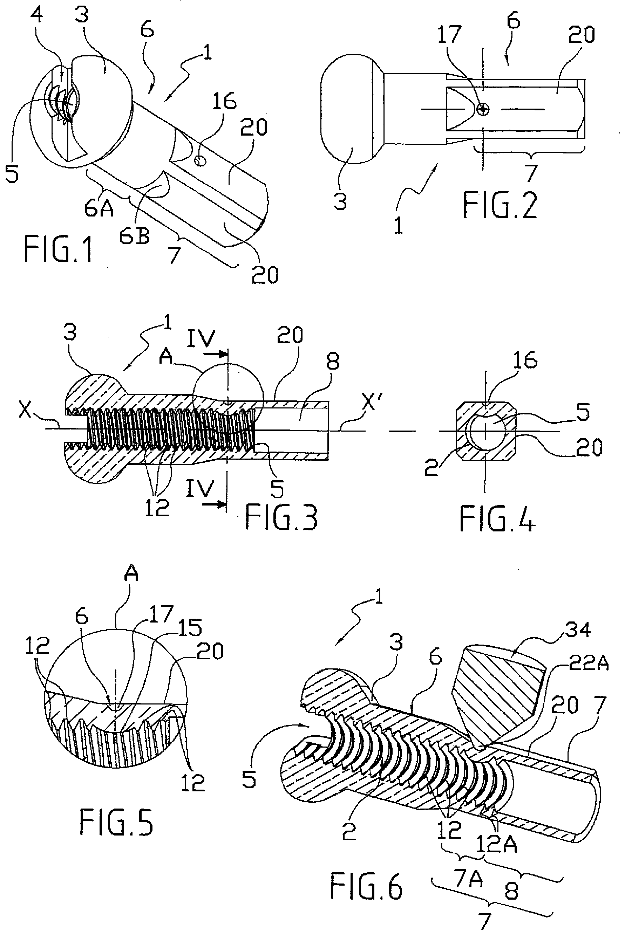

L'écrou 1 illustré aux figures 1 à 10 est plus particulièrement destiné à assurer l'assemblage et la fixation de pièces formées par des rayons de roues de bicyclettes, se présentant donc sous la forme de tiges, par exemples métalliques, dont l'une des extrémités terminales 11 est pourvue extérieurement d'un filetage 9, étant entendu que l'invention ne saurait être limitée à ce type particulier de pièces et d'assemblage, mais peut au contraire s'appliquer à tout type d'écrou pourvu d'un taraudage et destiné à assurer la fixation de pièces quelconques pourvues d'un filetage.

Ainsi, à titre d'exemple non limitatif, l'invention peut également s'appliquer à des écrous pourvus d'une tête dépourvue de fentes, ou pourvus d'une tête hexagonale classique, ou encore à des écrous borgnes, ou à des écrous doubles, carrés, à embase, à oreilles, à créneaux ou à papillons sans que cette liste soit limitative.

Par ailleurs, bien que la description ci-après sera plus particulièrement dirigée vers un écrou 1 pourvu d'un taraudage 2 destiné à assurer la fixation de rayons de bicyclettes, d'autres applications à d'autres domaines techniques tels que l'industrie automobile, l'industrie aéronautique ou la construction navale sont bien évidemment possibles sans que cette liste puisse être considérée comme étant limitative.

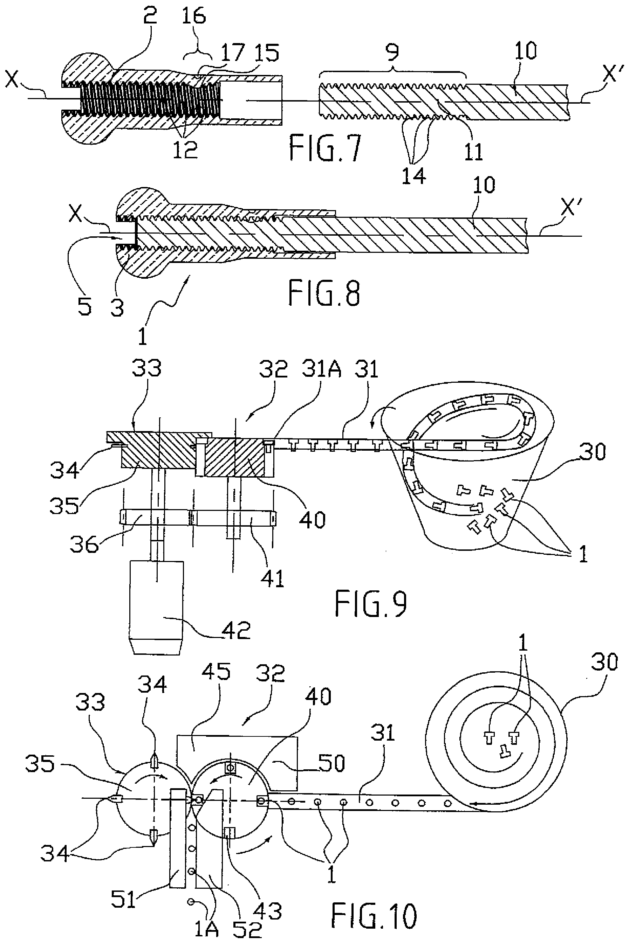

Tel qu'illustré aux figures, et en particulier aux figures 7 et 8, l'écrou 1 conforme à l'invention est pourvu d'un taraudage 2 interne garnissant les surfaces externes du puits traversant 5 et formant une série de contrefilets 12 hélicoïdaux, de pas constant. L'écrou 1 pourvu du taraudage 2 est destiné à être vissé sur le filetage 9 d'une pièce 10, du genre vis tel qu'un rayon de roue de bicyclette pour assurer l'assemblage des deux éléments.

Selon l'invention, l'écrou 1 est pourvu d'un taraudage 2 et d'un moyen de freinage pour assurer son freinage en position vissée sur le filetage 9 de la pièce 10, préférentiellement un rayon de roue de bicyclette de manière à obtenir un assemblage des deux pièces, savoir l'écrou 1 et le rayon, qui ne soit pas susceptible de se desserrer lorsque les contrefilets 12 sont en prise avec les filets 14 du filetage 9 dont le pas est identique.

Selon une caractéristique importante de l'invention, le moyen de freinage est formé par au moins une zone emboutie 16 du taraudage 2 au sein de laquelle le taraudage 2 est localement déformé et apte à être déformé par le filetage 9 de la pièce 10 lors du vissage. En d'autres termes, l'écrou 1 selon l'invention est pourvu d'un taraudage 2 et d'un moyen de freinage pour assurer son freinage en position vissée sur le filetage 9 d'une pièce 10 et est caractérisé en ce que le moyen de freinage est formé par au moins une zone emboutie du taraudage 2 au sein de laquelle le taraudage 2 est localement déformé et forme un bourrelet 15 correspondant à un écrasement d'une ou plusieurs sections des contrefilets 12 du taraudage 2, ledit taraudage 2 étant apte à être déformé par le filetage de la pièce 10 lors du vissage, les filets 14 du filetage 9 venant repousser et partiellement arracher le bourrelet 15. Il y a donc une rupture de la continuité des contrefilets 12.

La déformation localisée du taraudage 2 au sein de cette zone se traduit, tel qu'illustré par exemple en détail à la figure 5, notamment par la création d'un bourrelet 15 sur la face interne du puits traversant 5 correspondant à une sorte d'écrasement en direction de l'axe x-x' d'une ou plusieurs section(s) des contrefilets 12 du taraudage 2 qui correspond à un écrasement ou repoussement localisé de matière. La zone emboutie 16 se présente extérieurement, c'est-à-dire sur la surface externe 20 de l'écrou 1, par une zone légèrement défléchie ou incurvée et formant donc une dépression 17 et par exemple une cavité tronconique. La formation d'une zone emboutie 16 du taraudage 2 de l'écrou 1 dont les contrefilets 12 situés de part et d'autre du bourrelet 15 ne sont pas affectés, se traduit par une zone formant une friction supplémentaire due à la déformation supplémentaire du bourrelet 15 obtenu lorsque le filetage 9 vient déformer la zone emboutie, en l'occurrence le ou les bourrelet(s) 15 pratiqué(s) dans le taraudage 2 de l'écrou 1. Lors du vissage, les filets 14 du filetage 9 viennent en effet repousser et partiellement arracher le bourrelet 15 en créant la friction nécessaire au freinage et au blocage relatif de l'écrou 1 sur le filetage 9 de la pièce 10.

L'écrou 1 conforme à l'invention est pourvu d'une tête 3 se poursuivant par un fût 6 dont la section supérieure 6A est cylindrique, ladite portion supérieure cylindrique 6A se poursuit par la partie inférieure 7 de section carrée et d'épaisseur inférieure à celle de ladite section cylindrique supérieure 6A. Telle qu'illustrée, une zone de transition présentant des pans obliques 6B peut être prévue entre la partie supérieure cylindrique 6A et la partie inférieure 7. Telle qu'illustrée, en particulier à la figure 6, la partie inférieure 7 de section carrée par exemple, est donc formée de la zone inférieure 8 dépourvue de taraudage et d'une zone supérieure 7A comportant le début du filetage 9 qui se poursuit dans la section supérieure 6A. Selon l'invention, ladite au moins une déformation localisée du taraudage 2 est pratiquée sur une ou plusieurs surfaces externes 20 formant les faces de la partie inférieure 7 de section carrée. En effet, c'est dans cette zone que l'épaisseur de matière étant la plus faible, le filetage 9 de la pièce 10 trouve la plus faible résistance afin de pouvoir repousser la matière en offrant le plus faible couple de freinage. On obtiendra ainsi un couple de freinage adéquat, et par exemple inférieur à 11 centiNewtons et de préférence compris entre 3 et 10 centiNewtons. Un tel couple de freinage est particulièrement adapté pour être compatible avec les visseuses automatiques. Ce couple est par ailleurs obtenu, à titre d'exemple, par vissage d'un écrou de rayon de bicyclette en laiton vissé sur un rayon de bicyclette de 2,2 mm de diamètre (jauge 14) en acier avec filetage suivant la norme BSC (British Standard Cycle) A titre de variante préférentielle, une seule et unique zone emboutie 16 pourra être réalisée sur une surface externe 20.

Ainsi, selon l'invention, la déformation localisée de l'écrou est effectuée par une étape d'emboutissage localisée, par exemple sur la surface externe 20 de l'écrou 1, la déformation étant effectuée dans la zone d'épaisseur de matière la plus faible de l'écrou 1.

Selon une version particulièrement avantageuse de l'invention, la surface externe 20 de l'écrou 1 comporte au moins une zone déformée formant une dépression 17 au droit de laquelle se situe la zone emboutie du taraudage 2.

Selon une version particulièrement avantageuse de l'invention, tel qu'illustré à la figure 5, au moins une portion d'un contrefilet 12 du taraudage 2 est déformée au sein de la zone emboutie 16 de manière à assurer une résistance et à être déformée par le filetage 9 d'une pièce ou portion de pièce lors du vissage. En effet, plusieurs portions ou sections du taraudage 2 correspondant à un, ou deux voire trois contrefilets 12 peuvent être déformés pour assurer une friction plus ou moins importante.

Selon les caractéristiques particulièrement avantageuses de l'invention, la zone déformée forme une cavité, formée en l'occurrence par la dépression 17, laquelle cavité ou dépression 17 est obtenue par poinçonnage.

Avantageusement, la cavité ou dépression 17 est sensiblement circulaire, c'est-à-dire présente une section circulaire, bien que d'autres formes de sections soient envisageables, par exemple hexagonales ou pentagonales par exemple.

Tel qu'illustré aux figures 7 et 8, et de manière préférentielle, l'écrou 1 est un écrou de rayon de roue de bicyclette. Selon cette version particulièrement avantageuse de l'invention, l'écrou 1 est ainsi destiné à maintenir en position une pièce 10 formée par un rayon de roue de bicyclette en position fixe relativement à une jante (non représentée).

En raison des multiples possibilités d'application de l'écrou 1 embouti selon l'invention, l'écrou 1 embouti conforme à l'invention peut être formé par un écrou de motocyclette ou un écrou utilisable dans l'industrie automobile ou aéronautique ou dans la construction navale par exemple pour assurer l'assemblage de pièces 10 quelconques.

Selon l'invention, l'écrou 1 est formé dans un matériau plus tendre que celui de la pièce 10 ou portion de pièce 10 dont le filetage 9 est destiné à être vissé sur le taraudage 2 dudit écrou.

Les matériaux constitutifs de l'écrou et des pièces 10, du genre vis ou rayon de roue de bicyclette sont divers et peuvent être préférentiellement métalliques mais également à base de matériaux plastiques.

Ainsi, l'invention peut être considérée comme étant formée par un ensemble formé par un écrou 1 tel que décrit précédemment, et par exemple pourvu d'un taraudage 2 et d'un moyen de freinage formé par une zone emboutie16 du taraudage 2, zone au sein de laquelle le taraudage 2 est localement déformé, l'écrou 1 étant formé dans un matériau plus tendre que celui de la pièce 10 ou de la portion de pièce 10 dont le filetage 9 est destiné à être vissé sur le taraudage 2 dudit écrou.

L'invention concerne également procédé de fabrication d'un écrou (1) pourvu d'un taraudage (2) dans lequel on assure une déformation localisée du taraudage (2) pour réaliser une zone de freinage locale lors du vissage, la déformation localisée se traduisant par la création d'un bourrelet correspondant à un écrasement d'une ou plusieurs sections des contrefilets du taraudage (2), ladite zone étant apte à être déformée par le filetage d'une vis ou portion de vis lors du vissage.

Tel qu'illustré, en particulier à la figure 6, la déformation localisée est effectuée par une étape d'emboutissage localisée sur la surface externe 20 de l'écrou 1 et permettant d'obtenir un couple de freinage inférieur à 11 centiNewtons et de préférence compris entre 3 et 10 centiNewtons. De manière préférentielle, l'étape d'emboutissage est réalisée par poinçonnage à l'aide d'un poinçon 34, possédant une pointe 22A par exemple tronconique, venant déformer localement la surface externe 20 de l'écrou 1 au cours d'une étape de poinçonnage, de manière à déformer localement le taraudage 2.

Avantageusement, la déformation localisée est effectuée dans la zone d'épaisseur de matière la plus faible de l'écrou 1, et en particulier dans la surface externe 20 de la zone inférieure 7A, par exemple de section carrée.

Tel qu'illustré, l'étape d'emboutissage est effectuée localement en amont des premiers contrefilets du taraudage 2 de manière à laisser les premiers contrefilets 12A débutant à partir de la zone inférieure 8 exempts de déformation.

Sur la figure 6, on voit que la première série des premiers contrefilets 12A formant la zone d'amorce du vissage débutant à l'extrémité de la zone 8 sont exempts de toute déformation. Ainsi l'emboutissage est sensiblement ponctuel et disposé de telle manière sur l'écrou 1 qu'il autorise aux premiers filets 14 du filetage 9, une prise suffisante pour que la pièce 10, en l'occurrence le rayon de roue de bicyclette, déforme à son tour le bourrelet 15 du taraudage 2 obtenu lors de l'emboutissage. Ainsi on initie un vissage non freiné avec les premiers filets de la vis ou de la pièce pourvue du filetage 9.

Tel qu'illustré à la figure 6, le poinçon 34 est par exemple de forme conique ou autre, et par exemple tronconique, le poinçonnage devant être suffisamment pénétrant afin de déformer le taraudage 2 intérieur.

Néanmoins, la déformation obtenue ne doit pas être excessive pour permettre, en particulier lors de l'utilisation de visseuses automatiques sur des chaînes de montage, à l'aiguille de guidage d'extrémité de la visseuse automatique, de pénétrer l'intérieur du taraudage 2 sans résistance, ou du moins sans résistance excessive. La déformation ne doit également pas être excessive pour permettre au filetage 9 de repousser la déformation localisée obtenue par emboutissage.

Selon une version avantageuse de l'invention, on effectue la déformation localisée du taraudage 2 à partir d'écrous taraudés 1 qui sont présentés à une station de poinçonnage 33 pour être poinçonnés sur leur surface externe en étant soutenus dans un logement 43 pour permettre la réalisation du poinçonnage. Les écrous taraudés 1 étant ainsi maintenus en position ferme dans un logement, l'opération de poinçonnage peut être effectuée facilement et rapidement.

Bien que plusieurs types de déplacements relatifs entre les écrous taraudés 1 disposés dans leur logement 43 d'une part et la station de poinçonnage 33 d'autre part puissent être envisagés, et par exemple par translation, le procédé de fabrication selon l'invention prévoit que les écrous taraudés 1 et leurs logements 43 sont présentés à la station de poinçonnage 33 en étant mis en rotation relative.

Plus particulièrement, la station de poinçonnage 33 est mise en rotation synchrone inversée avec la rotation du ou des logement(s) 43.

Tel qu'illustré aux figures 9 et 10, et de manière schématique, les écrous taraudés 1 pourvus d'une déformation localisée de leur taraudage 2 formant ainsi des écrous taraudés emboutis 1A, sont obtenus à l'aide d'une installation de fabrication d'un écrou 1 comportant :
- Une trémie 30 comportant une pluralité d'écrous taraudés 1 en vrac dépourvus de déformation locale de leur taraudage 2,
- Un moyen de convoyage 31 reliant la trémie 30 à une station d'alimentation 32 des écrous taraudés 1 et alimentant la station d'alimentation 32 avec des écrous taraudés 1 se présentant individuellement et dans une position définie à la station d'alimentation 32,
- Une station de poinçonnage 33 pourvue d'au moins un poinçon 34 et assurant le poinçonnage individualisé de chaque écrou taraudé 1 présenté par le moyen de convoyage 31.

La trémie 30 peut être avantageusement un bol vibrant distributeur au sein duquel les écrous taraudés 1 sont déposés en vrac.

Le moyen de convoyage 31 peut être avantageusement un rail distributeur disposé de manière adéquate et fonctionnant par exemple en circuit fermé avec une ou plusieurs boucles de manière à pouvoir récupérer en continu les écrous taraudés 1 dans la trémie 30 tout en les orientant pour qu'ils puissent être positionnés et présentés individuellement dans une position définie et précise en vue d'être récupérés, à l'extrémité 31A du moyen de convoyage 31 par la station d'alimentation 32.

De manière préférentielle, le moyen de convoyage 31 est ainsi un rail de guidage des écrous taraudés 1 qui est profilé pour présenter les écrous taraudés 1 en position axiale, de préférence tête en haut, à la station d'alimentation 32. Ainsi selon cette disposition préférentielle, les écrous taraudés 1 sont présentés avec leur axe de révolution x-x' sensiblement verticalement, la tête 3 étant située en haut c'est-à-dire au-dessus du fût 6, de telle sorte que les écrous taraudés 1 sont récupérés par la station d'alimentation 32 dans cette position. A titre d'alternative, les écrous taraudés 1 peuvent être aussi présentés en position tête en bas, voire dans des positions intermédiaires sans sortir du cadre de l'invention.

Avantageusement, la station d'alimentation 32 comprend une roue de présentation 40, de préférence dentée, susceptible d'être mise en rotation, par exemple par le biais d'engrenages 41 et d'un moteur 42, ladite roue de présentation 40 étant pourvue, par exemple à sa périphérie, de logements 43 ayant une contre-forme correspondant à la forme des écrous taraudés 1 de manière à pouvoir les accueillir et les maintenir fermement dans la position de présentation conférée par le moyen de convoyage 31 par l'intermédiaire d'un premier moyen de guidage 45. Grâce à cette disposition, les écrous taraudés 1 peuvent être accueillis au sein des logements 43 pour être ensuite transférés, au sein de chaque logement 43, à la station de poinçonnage 33 tout en étant maintenus pendant ce trajet par le premier moyen de guidage 45, par exemple formé par une tôle de guidage 50 avec une dépouille hémicirculaire.

Tel qu'illustré, la roue de présentation 40 peut comporter quatre logements 43 disposés par paires en position diamétralement opposées et présentant un fond et des parois latérales qui viennent supporter fermement chaque écrou taraudé 1 avec la tête 3 en haut et le fût 6 en bas.

De manière avantageuse, la station de poinçonnage 33 comprend également une roue de poinçonnage 35 équipée d'au moins un poinçon 34 et montée en rotation synchrone inverse avec la roue de présentation 40 et disposée à la distance idoine pour réaliser le poinçonnage de chaque écrou taraudé 1 sur sa face externe 20 lorsqu'il est dans son logement 43.

Avantageusement, la roue de poinçonnage 35 est également entraînée par le moteur 42 par le biais d'engrenages complémentaires 36 et est par exemple d'un diamètre sensiblement identique à celui de la roue de présentation 40 tout en étant positionnée de manière tangentielle à ladite roue de présentation 40 de telle manière que les poinçons 34 exercent une pression suffisante sur les écrous taraudés 1 supportés dans les logements 43 pour les emboutir et déformer, par impact, leur taraudage 2.

De préférence, tel qu'illustré à la figure 10, la roue de poinçonnage 35 comporte quatre poinçons 34 montés de manière diamétralement opposée sur la périphérie de la roue de poinçonnage 35. Les poinçons 34 sont montés avec une possibilité de réglage, par exemple axiale, de leur position sur la roue de poinçonnage 35 de façon à pouvoir régler la profondeur d'emboutissage. Bien évidemment, à titre de variante, un nombre supérieurs de poinçons 34 et de logements 43 peut être envisagé.

L'installation de fabrication comporte enfin un ou plusieurs second(s) moyens de guidage pour assurer le bon positionnement et la bonne évacuation des écrous taraudés 1 puis des écrous taraudés et emboutis 1A, c'est-à-dire présentant une zone emboutie de leur taraudage 2. Avantageusement, les moyens de guidage comprennent en plus de la tôle de guidage 50 entourant à distance la roue de présentation 40 pour guider les écrous taraudés 1 lorsqu'ils sont dans leur logement 43 jusqu'à la station de poinçonnage 33, également deux déflecteurs d'évacuation 51, 52 disposés à la sortie de l'installation pour guider l'évacuation des écrous taraudés emboutis 1A après que ces derniers aient subis l'opération d'emboutissage.

Avantageusement, le moyen de convoyage 31, la station d'alimentation 32 et la station de poinçonnage 33 fonctionnent en continu ou par séquences. Avantageusement, les roues de présentation 40 et de poinçonnage 35 tournent à la même vitesse mais en sens opposé.

Les écrous taraudés et emboutis 1A peuvent être évacués ensuite par simple gravité dans un réceptacle de stockage (non représenté).

L'installation est donc conçue pour amener les écrous taraudés 1 non emboutis par l'intermédiaire d'un moyen de convoyage 31 à une position d'emboutissage entre deux roues disposées en position sensiblement tangentielle, et tournant en sens inverse et de manière synchrone, pour réaliser l'emboutissage des écrous taraudés 1 de sorte à obtenir des écrous taraudés emboutis 1A.

L'invention concerne également un procédé d'assemblage d'un écrou 1 pourvu d'un taraudage 2 avec une pièce 10 pourvue d'un filetage 9 par vissage relatif de l'écrou sur la pièce ou inversement, le procédé étant caractérisé par le fait qu'après l'étape de vissage relatif de l'écrou 1 sur la pièce 10 ou inversement, on réalise au moins une déformation localisée du taraudage 2 de l'écrou 1 par repoussement de matière de manière à assurer le blocage relatif de l'écrou 1 et de la pièce 10, la déformation localisée du taraudage 2 étant effectuée par une opération d'emboutissage localisée sur la surface externe 20 de l'écrou 1 après vissage, par exemple avec une visseuse automatique.

En effet, selon l'invention, le poinçonnage ou l'emboutissage de l'écrou taraudé peut être non seulement réalisé sur l'écrou taraudé seul, c'est-à-dire non encore assemblé après réalisation de son taraudage 2, mais également après son assemblage avec la pièce 10 à assembler, et par exemple son assemblage avec le rayon de la roue de bicyclette.

Avantageusement, l'opération d'emboutissage est alors réalisée par poinçonnage à l'aide d'un poinçon venant déformer localement la surface externe 20 de l'écrou 1 de manière à déformer localement le taraudage 2 en créant un bourrelet 15 de matière réalisant une rupture ou discontinuité des contrefilets 12 par repoussement de matière, ce bourrelet 15 servant ensuite de frein pour les fillets 14.

Pour permettre une prise suffisante des premiers filets 14 du filetage 9, l'opération d'emboutissage est effectuée localement en amont des premiers contrefilets 12A de manière à laisser les premiers contrefilets 12A exempts de déformation. Elle est de préférence effectuée dans la zone d'épaisseur de matière la plus faible de l'écrou 1.

Le procédé d'assemblage est, selon l'invention, mis en œuvre au cours du montage de rayons de roues de bicyclette sur une roue de bicyclette, lesdits rayons étant pourvus d'un filetage terminal 9 et formant la/les pièce(s) 10 destinée(s) à recevoir l'écrou 1.

De manière générale, l'utilisation selon l'invention concerne l'utilisation d'un écrou 1 pourvu d'un taraudage 2 déformé localement par poinçonnage, le poinçonnage étant localisé sur la surface externe 20 de l'écrou 1 par repoussement de matière, le bourrelet 15 ainsi crée étant un frein assurant un freinage des filets 14 du filetage 9 d'une pièce 10, par exemple une vis, destinée à être assemblée avec le dit écrou 1, lesdits filets 14 assurant une déformation du taraudage 2 lors du vissage en venant repousser et partiellement, voire totalement, arracher le bourrelet 15.

Ainsi l'invention consiste à réaliser un emboutissage sur la face extérieure 20 de l'écrou 1 afin de déformer légèrement le taraudage 2 de l'écrou 1 par repoussement de la matière, le bourrelet 15 créé étant un frein à la pénétration du filetage 9, et étant ultérieurement à nouveau déformé par les filets 14 de la vis lors de son vissage.

Les écrous taraudés emboutis 1A conformes à l'invention évitent ainsi d'avoir à déposer de la colle sur les taraudages 2 et/ou filetages 9 des pièces à assembler supprimant ainsi le problème de nettoyage et de dysfonctionnement des visseuses automatiques tout en réduisant fortement la fréquence d'arrêt des chaînes de fabrication. La solution proposée est par ailleurs parfaitement compatible avec toutes les lignes de montage existantes et s'avèrent donc être d'une mise en œuvre particulièrement économique et simple.

L'invention s'avère être par ailleurs d'une application générale, les écrous taraudés emboutis 1A selon l'invention pouvant en outre supporter plusieurs montages et démontages successifs sans réduction notable de leur valeur de freinage.

### POSSIBILITE D'APPLICATION INDUSTRIELLE

L'invention trouve son application industrielle dans l'élaboration et l'utilisation d'écrous emboutis utilisables dans l'industrie, et en particulier pour le montage et la fixation de rayons de roues de bicyclettes

## Revendications

1. Ecrou (1) pourvu d'un taraudage (2) et d'un moyen de freinage pour assurer son freinage en position vissée sur le filetage (9) d'une pièce (10), l'écrou (1) étant pourvu d'une tête (3) se poursuivant par un fût (6) dont une partie supérieure (6A) est cylindrique et se poursuit par une partie inférieure (7) de section carrée et d'épaisseur inférieure à celle de ladite partie cylindrique supérieure (6A), ledit écrou étant **caractérisé en ce que** le moyen de freinage est formé par au moins une zone emboutie du taraudage (2) au sein de laquelle le taraudage (2) est localement déformé et forme un bourrelet (15) correspondant à un écrasement d'une ou plusieurs sections des contrefilets (12) du taraudage (2), ledit taraudage (2) étant apte à être déformé par le filetage (9) de la pièce (10) lors du vissage, les filets (14) du filetage (9) venant repousser et partiellement arracher le bourrelet (15), ladite au moins une déformation localisée du taraudage (2) étant pratiquée sur une ou plusieurs surfaces externes (20) formant les faces de la partie inférieure (7) de section carrée.

2. Ecrou (1) selon la revendication 1 **caractérisé en ce que** la surface externe (20) de l'écrou (1) comporte au moins une zone déformée formant une dépression (17) au droit de laquelle se situe la zone emboutie du taraudage (2).

3. Ecrou (1) selon la revendication 1 ou la revendication 2 **caractérisé en ce qu'**au moins une portion d'un contrefilet (12A) du taraudage (2) est déformée au sein de la zone emboutie de manière à assurer une résistance et à être déformée par le filetage (9) d'une vis ou portion de vis lors du vissage, ladite zone déformée formant préférentiellement une cavité (17) avantageusement sensiblement circulaire, ladite cavité étant préférentiellement obtenue par poinçonnage.

4. Ecrou (1) selon l'une des revendications précédentes **caractérisé en ce que** qu'il est formé par un écrou (1) de rayon de roues de bicyclette, un écrou (1) de motocyclette ou un écrou (1) utilisable dans l'industrie automobile ou aéronautique ou dans la construction navale.

5. Ecrou (1) selon l'une des revendications précédentes **caractérisé en ce qu'**il est formé dans un matériau plus tendre que celui de la pièce (10) ou portion de pièce (10) dont le filetage (9) est destiné à être vissé sur le taraudage (2) dudit écrou (1).

6. Ensemble formé par un écrou (1) selon l'une des revendications 1 à 5 et une vis ou portion de vis, l'écrou (1) étant formé dans un matériau plus tendre que celui de la vis ou portion de vis dont le filetage (9) est destiné à être vissé sur le taraudage (2) dudit écrou (1).

7. Procédé de fabrication d'un écrou (1) pourvu d'un taraudage (2), l'écrou (1) étant pourvu d'une tête (3) se poursuivant par un fût (6) dont une partie supérieure (6A) est cylindrique et se poursuit par une partie inférieure (7) de section carrée et d'épaisseur inférieure à celle de ladite partie cylindrique supérieure (6A), ledit procédé étant **caractérisé en ce qu'**on assure une déformation localisée du taraudage (2) pour réaliser une zone de freinage locale lors du vissage, la déformation localisée se traduisant par la création d'un bourrelet correspondant à un écrasement d'une ou plusieurs sections des contrefilets du taraudage (2), ladite zone étant apte à être déformée par le filetage d'une vis ou portion de vis lors du vissage, ladite déformation localisée étant préférentiellement effectuée dans la zone d'épaisseur de matière la plus faible de l'écrou, ladite au moins une déformation localisée du taraudage (2) étant pratiquée sur une ou plusieurs surfaces externes (20) formant les faces de la partie inférieure (7) de section carrée.

8. Procédé de fabrication selon la revendication 7 **caractérisé en ce que** la déformation localisée est effectuée par une étape d'emboutissage localisée sur la surface externe (20) de l'écrou (1) et permettant d'obtenir un couple de serrage inférieur à 11 centiNewtons et de préférence compris entre 3 et 10 centiNewtons, ladite déformation localisée étant préférentiellement effectuée dans la zone d'épaisseur de matière la plus faible de l'écrou.

9. Procédé de fabrication selon la revendication 8 **caractérisé en ce que** l'étape d'emboutissage est réalisée par poinçonnage à l'aide d'un poinçon (34) venant déformer localement la surface externe (20) de l'écrou (1) de manière à déformer localement le taraudage (2).

10. Procédé de fabrication selon la revendication 8 ou 9 **caractérisé en ce que** l'étape d'emboutissage est effectuée localement en amont des premiers contrefilets (12A) du taraudage (2) de manière à laisser les premiers contrefilets (12A) exempts de déformation.

11. Procédé de fabrication selon l'une des revendications 7 à 10 **caractérisé en ce qu'**on effectue la déformation localisée à partir d'écrous taraudés (1) qui sont présentés à une station de poinçonnage (33) pour être poinçonnés sur leur surface externe (20) en étant soutenus dans un logement (43) pour permettre la réalisation du poinçonnage, lesdits écrous taraudés (1) et leur logement (43) étant préférentiellement présentés à la station de poinçonnage (33) en étant mis en rotation, ladite station de poinçonnage (33) étant avantageusement mise en rotation synchrone inversée avec la rotation du/des logement(s) (43).

12. Procédé d'assemblage d'un écrou (1) pourvu d'un taraudage (2) avec une pièce (10) pourvue d'un filetage (9) par vissage relatif de l'écrou (1) sur la pièce (10) ou inversement, l'écrou (1) étant pourvu d'une tête (3) se poursuivant par un fût (6) dont une partie supérieure (6A) est cylindrique et se poursuit par une partie inférieure (7) de section carrée et d'épaisseur inférieure à celle de ladite partie cylindrique supérieure (6A), ledit procédé étant **caractérisé en ce qu'**après l'étape de vissage relatif de l'écrou (1) sur la pièce (10) ou inversement, on réalise au moins une déformation localisée du taraudage (2) de l'écrou (1) par repoussement de matière de manière à assurer le blocage relatif de l'écrou (1) et de la pièce (10), la déformation localisée du taraudage (2) étant effectuée par une opération d'emboutissage localisée sur la surface externe (20) de l'écrou (1) et préférentiellement réalisée par poinçonnage à l'aide d'un poinçon (34) venant déformer localement la surface externe (20) de l'écrou (1) de manière à déformer localement le taraudage (2), ladite opération d'emboutissage étant préférentiellement effectuée localement en amont des premiers contrefilets (12A) du taraudage (2) de manière à laisser les premiers contrefilets (12A) exempts de déformation, ladite au moins une déformation localisée du taraudage (2) étant pratiquée sur une ou plusieurs surfaces externes (20) formant les faces de la partie inférieure (7) de section carrée.

13. Procédé d'assemblage selon la revendication 12 **caractérisé en ce qu'**il est mis en œuvre au cours du montage de rayons de roues de bicyclettes sur une roue de bicyclette, lesdits rayons étant pourvus d'un filetage (9) terminal et formant la/les pièce(s) (10) destinées à recevoir l'écrou (1).

14. Utilisation d'un écrou (1) pourvu d'une tête (3) se poursuivant par un fût (6) dont une partie supérieure (6A) est cylindrique et se poursuit par une partie inférieure (7) de section carrée et d'épaisseur inférieure à celle de ladite partie cylindrique supérieure (6A), ledit écrou étant pourvu d'un taraudage (2) déformé localement par poinçonnage localisé sur la surface externe (20) de l'écrou (1) par repoussement de matière, le bourrelet (15) ainsi crée étant un frein assurant un freinage des filets (14) du filetage (9) d'une pièce (10) destinée à être assemblée avec ledit écrou (1), lesdits filets (14) assurant une déformation du taraudage (2) lors du vissage en venant repousser et partiellement arracher le bourrelet (15), ladite au moins une déformation localisée du taraudage (2) étant pratiquée sur une ou plusieurs surfaces externes (20) formant les faces de la partie inférieure (7) de section carrée.

## Patentansprüche

1. Mutter (1), die eine Gewindebohrung (2) und ein Sicherungsmittel aufweist, um ihr Halten in der eingeschraubten Stellung auf dem Gewinde (9) eines Teils (10) zu sichern, wobei die Mutter (1) einen Kopf (3) aufweist, auf den ein Schaft (6) folgt, von dem ein oberer Teil (6A) zylindrisch ist und auf den ein unterer Teil (7) mit quadratischem Querschnitt und mit einer geringeren Dicke als die des oberen zylindrischen Teils (6A) folgt, wobei die Mutter **dadurch gekennzeichnet ist, dass** das Sicherungsmittel von zumindest einem verjüngten Abschnitt der Gewindebohrung (2) gebildet ist, innerhalb dessen die Gewindebohrung (2) örtlich verformt ist und einen Wulst (15) bildet, der einer Stauchung von einem oder mehreren Gegengewindegänge (12) der Gewindebohrung (2) entspricht, wobei die Gewindebohrung (2) durch das Außengewinde (9) des Teils (10) während des Schraubens geformt werden kann, wobei die Gewindegänge (14) des Außengewindes (9) den Wulst (15) zurückdrücken und teilweise abtrennen, wobei die mindestens eine örtliche Verformung der Gewindebohrung (2) an einer oder mehreren Außenflächen (20) erfolgt, die die Flächen des unteren Teils (7) mit quadratischem Querschnitt bilden.

2. Mutter (1) nach Anspruch 1, **dadurch gekennzeichnet, dass** die Außenfläche (20) der Mutter (1) mindestens eine verformte Zone aufweist, die eine Einsenkung (17) bildet, in deren Bereich sich der verjüngte Abschnitt der Gewindebohrung (2) befindet.

3. Mutter (1) nach Anspruch 1 oder Anspruch 2, **dadurch gekennzeichnet, dass** zumindest ein Teil eines Gegengewindes (12A) der Gewindebohrung (2) innerhalb des geprägten Bereiches derart verformt ist, dass es beim Einschrauben des Außengewindes (9) einer Schraube oder eines Teiles einer Schraube Widerstand leistet und von diesem verformt wird, wobei der verformte Abschnitt vorzugsweise einen Hohlraum (17) bildet, der vorteilhafterweise im Wesentlichen kreisförmig ist, wobei der Hohlraum vorzugsweise durch Umformen erzeugt ist.

4. Mutter (1) nach einem der vorhergehenden Ansprüche, **dadurch gekennzeichnet, dass** sie eine Fahrradradsatzmutter (1), eine Motorradradsatzmutter (1) oder eine Mutter (1) zur Verwendung in der Automobil- oder Luftfahrtindustrie oder im Schiffbau ist.

5. Mutter (1) nach einem der vorhergehenden Ansprüche, **dadurch gekennzeichnet, dass** sie aus einem Material gebildet ist, das weicher ist als das des Teils (10) oder des Abschnitts des Teils (10), dessen Außengewinde (9) dazu bestimmt ist, in die Gewindebohrung (2) der genannten Mutter (1) eingeschraubt zu werden.

6. Baugruppe aus einer Mutter (1) nach einem der Ansprüche 1 bis 5 und einer Schraube oder einem Teil einer Schraube, wobei die Mutter (1) aus einem weicheren Material als das der Schraube oder des Teils einer Schraube besteht, deren Außengewinde (9) in die Gewindebohrung (2) der Mutter (1) eingeschraubt werden soll.

7. Verfahren zur Herstellung einer Mutter (1), die mit einer Gewindebohrung (2) versehen ist, wobei die Mutter (1) einen Kopf (3) aufweist, auf den ein Schaft (6) folgt, von dem ein oberer Teil (6A) zylindrisch ist und auf den ein unterer Teil (7) mit quadratischem Querschnitt und einer geringeren Dicke als der obere zylindrische Teil (6A) folgt, wobei das Verfahren **dadurch gekennzeichnet ist, dass** eine örtliche Verformung der Gewindebohrung (2) vorgenommen wird, um eine örtliche Bremszone beim Verschrauben zu erzeugen, wobei die örtliche Verformung zur Bildung eines Wulstes führt, der einer Quetschung eines oder mehrerer Abschnitte(s) der Gewindegänge der Gewindebohrung (2) entspricht, wobei dieser Abschnitt durch das Gewinde einer Schraube oder eines Teils einer Schraube während des Verschraubens verformt werden kann, wobei diese örtliche Verformung vorzugsweise in dem Bereich der geringsten Materialstärke der Mutter durchgeführt wird, wobei diese mindestens eine örtliche Verformung der Gewindebohrung (2) an einer oder mehreren Außenflächen (20) erfolgt, die die Flächen des unteren Teils (7) mit quadratischem Querschnitt bilden.

8. Herstellungsverfahren nach Anspruch 7, **dadurch gekennzeichnet, dass** die örtliche Verformung durch einen örtlichen Umformschritt auf der Außenfläche (20) der Mutter (1) erfolgt und es ermöglicht, ein Anzugsmoment von weniger als 11 Centi-Newton und vorzugsweise zwischen 3 und 10 Centi-Newton zu erzeugen, wobei die örtliche Verformung vorzugsweise im Bereich der geringsten Materialstärke der Mutter erfolgt.

9. Herstellungsverfahren nach Anspruch 8, **dadurch gekennzeichnet, dass** der Umformschritt durch Pressen unter Verwendung eines Stempels (34) durchgeführt wird, der die Außenfläche (20) der Mutter (1) örtlich verformt, um das Gewinde (2) örtlich zu verformen.

10. Herstellungsverfahren nach Anspruch 8 oder 9, **dadurch gekennzeichnet, dass** der Umformschritt räumlich vor den ersten Gewindegängen (12A) der Gewindebohrung (2) ausgeführt wird, um die ersten Gewindegänge (12A) unverformt zu lassen.

11. Herstellungsverfahren nach einem der Ansprüche 7 bis 10, **dadurch gekennzeichnet, dass** eine örtliche Verformung von Gewindemuttern (1) durchgeführt wird, die einer Umformstation (33) zum Umformen ihrer Außenfläche (20) zugeführt werden, während sie in einem Magazin (43) zur Durchführung des Umformens gehalten sind, wobei die Gewindemuttern (1) und ihr Magazin (43) vorzugsweise durch Drehen der Umformstation (33) zugeführt werden, wobei die Umformstation (33) vorteilhafterweise synchron rückwärts mit der Drehung des/der Magazin(s/e) (43) gedreht wird.

12. Verfahren zum Zusammenbau einer mit einer Gewindebohrung (2) versehenen Mutter (1) mit einem mit einem Außengewinde (9) versehenen Teil (10) durch Aufschrauben der Mutter (1) auf das Teil (10) oder umgekehrt, wobei die Mutter (1) einen Kopf (3) aufweist, der sich in einen Schaft (6) fortsetzt, von dem ein oberer Abschnitt (6A) zylindrisch ist und der sich in einen unteren Abschnitt (7) mit quadratischem Querschnitt und einer geringeren Dicke als die des oberen zylindrischen Abschnitts (6A) fortsetzt, wobei das Verfahren **dadurch gekennzeichnet ist, dass** nach dem Schritt des relativen Aufschraubens der Mutter (1) auf das Teil (10) oder umgekehrt mindestens eine örtliche Verformung der Gewindebohrung (2) der Mutter (1) durch Zurückverlagern von Material durchgeführt wird, um die Lage der Mutter (1) relativ zu dem Teil (10) sicherzustellen, wobei die örtliche Verformung der Gewindebohrung (2) durch einen an der Außenfläche (20) der Mutter (1) örtlichen Umformvorgang und vorzugsweise durch Prägen unter Verwendung eines Stempels (34) erfolgt, der die Außenfläche (20) der Mutter (1) örtlich verformt, um die Gewindebohrung (2) örtlich zu verformen, wobei der Umformvorgang vorzugsweise örtlich vor den ersten Gewindegängen (12A) der Gewindebohrung (2) durchgeführt wird, um die ersten Gewindegänge (12A) unverformt zu lassen, wobei die mindestens eine örtliche Verformung der Gewindebohrung (2) an einer oder mehreren Außenflächen (20) durchgeführt wird, die die Flächen des unteren Teils (7) mit quadratischem Querschnitt bilden.

13. Verfahren zum Zusammenbau nach Anspruch 12, **dadurch gekennzeichnet, dass** es beim Einbau von Fahrradradspeichen an einem Fahrradrad durchgeführt wird, wobei die Speichen mit einem Endgewinde (9) versehen sind und den oder die Teil(e) (10) bilden, die zur Aufnahme der Mutter (1) bestimmt sind.

14. Verwendung einer Mutter (1), die mit einem Kopf (3) versehen ist, der sich in einem Schaft (6) fortsetzt, von dem ein oberer Abschnitt (6A) zylindrisch ist und sich in einen unteren Abschnitt (7) mit quadratischem Querschnitt und einer geringeren Dicke als der des oberen zylindrischen Abschnitts (6A) fortsetzt, wobei die Mutter eine Gewindebohrung aufweist, die örtlich durch Prägen verformt wird, das an der Außenfläche (20) der Mutter (1) durch Zurückdrücken von Material erfolgt, wobei der so gebildete Wulst (15) eine Bremse ist, die das Abbremsen der Gewindegänge (14) des Außengewindes (9) eines Teils (10) gewährleistet, das dazu bestimmt ist, mit der Mutter (1) zusammengebaut zu werden, wobei die Gewindegänge (14) eine Verformung der Gewindebohrung (2) beim Verschrauben durch Zurückdrücken und teilweises Abtragen des Wulstes (15) gewährleisten, wobei die mindestens eine örtliche Verformung der Gewindebohrung (2) auf einer oder mehreren Außenflächen (20) erfolgt, die die Flächen des unteren Teils (7) mit quadratischem Querschnitt bilden.

## Claims

1. Nut (1) provided with an internal thread (2) and with a restriction means for locking thereof in a position screwed onto the external thread (9) of a part (10), the nut (1) being provided with a head (3) continued by a barrel (6) an upper part (6A) of which is cylindrical and continues with a lower part (7) with a square cross section and with a thickness less than that of said upper cylindrical part (6A), said nut being **characterised in that** the restriction means is formed by at least one pressed region of the internal thread (2) in which the internal thread (2) is locally deformed and forms a band (15) corresponding to a crushing of one or more sections of the counter-threads (12) of the internal thread (2), said internal thread (2) being able to be deformed by the external thread (9) of the part (10) during screwing, the threads (14) of the external thread (9) pushing and partly tearing the band (15), said at least one localised deformation of the internal thread (2) being produced on one or more external surfaces (20) forming the faces of the lower part (7) with a square cross section.

2. Nut (1) according to claim 1, **characterised in that** the external surface (20) of the nut (1) comprises at least one deformed region forming a hollow (17) in line with which the pressed region of the internal thread (2) is situated.

3. Nut (1) according to claim 1 or claim 2, **characterised in that** at least one portion of a counter-thread (12A) of the internal thread (2) is deformed in the pressed region so as to provide resistance to and to be deformed by the external thread (9) of a screw or portion of a screw during screwing, said deformed region preferentially forming an advantageously substantially circular cavity (17), said cavity preferentially being obtained by punching.

4. Nut (1) according to one of the preceding claims, **characterised in that** it is formed by a nut (1) of a bicycle-wheel spoke, a motorcycle nut (1) or a nut (1) that can be used in the automobile or aeronautical industry or in naval construction.

5. Nut (1) according to one of the preceding claims, **characterised in that** it is formed in a material that is softer than that of the part (10) or portion of a part (10) the external thread (9) of which is intended to be screwed onto the internal thread (2) of said nut (1).

6. Assembly formed by a nut (1) according to one of claims 1 to 5 and a screw or portion of a screw, the nut (1) being formed from a material softer than that of the screw or portion of screw the external thread (9) of which is intended to be screwed onto the internal thread (2) of said nut (1).

7. Method for manufacturing a nut (1) provided with an internal thread (2), the nut (1) being provided with a head (3) continued by a barrel (6) an upper part (6A) of which is cylindrical and continues with a lower part (7) with a square cross section and with a thickness less than that of said upper cylindrical part (6A), said method being **characterised in that** a localised deformation of the internal thread (2) is provided in order to produce a local restriction region during screwing, the localised deformation resulting in the creation of a band corresponding to a crushing of one or more sections of the counter-threads of the internal thread (2), said region being able to be deformed by the external thread of a screw or portion of a screw during screwing, said localised deformation preferentially being effected in the region with the smallest thickness of material of the nut, said at least one localised deformation of the internal thread (2) being formed on one or more external surfaces (20) forming the faces of the lower part (7) with a square cross section.

8. Manufacturing method according to claim 7, **characterised in that** the localised deformation is produced by a step of localised pressing on the external surface (20) of the nut (1) and making it possible to obtain a torque of less than 11 centinewtons and preferably between 3 and 10 centinewtons, said localised deformation preferentially being produced in the region with the smallest thickness of material of the nut.

9. Manufacturing method according to claim 8, **characterised in that** the pressing step is performed by punching by means of a punch (34) locally deforming the external surface (20) of the nut (1) so as to locally deform the internal thread (2).

10. Manufacturing method according to claim 8 or 9, **characterised in that** the pressing step is performed locally upstream of the first counter-threads (12A) of the internal thread (2) so as to leave the first counter-threads (12A) free from deformation.

11. Manufacturing method according to one of claims 7 to 10, **characterised in that** the localised deformation is effected using threaded nuts (1) that are presented to a punching station (33) in order to be punched on their external surface (20) while being supported in a housing (43) in order to allow the performance of the punching, said threaded nuts (1) and their housing (43) preferentially being presented to the punching station (33) while being rotated, said punching station (33) advantageously being rotated in reversed synchrony with the rotation of the housing or housings (43).

12. Method for assembling a nut (1) provided with an internal thread (2) with a part (10) provided with an external thread (9) by relative screwing of the nut (1) onto the part (10) or vice versa, the nut (1) being provided with a head (3) continued by a barrel (6) an upper part (6A) of which is cylindrical and continues with a lower part (7) with a square cross section and with a thickness less than that of said upper cylindrical part (6A), said method being **characterised in that**, after the step of relative screwing of the nut (1) onto the part (10) or vice versa, at least one localised deformation of the internal thread (2) of the nut (1) is produced by driving back material so as to provide the relative locking of the nut (1) and of the part (10), the localised deformation of the internal thread (2) being effected by an operation of localised pressing on the external surface (20) of the nut (1) and preferentially performed by punching by means of a punch (34) locally deforming the external surface (20) of the nut (1) so as to locally deform the internal thread (2), said pressing operation preferably being performed locally upstream of the first counter-threads (12A) of the internal thread (2) so as to leave the first counter-threads (12A) free from deformation, said at least one localised deformation of the internal thread (2) being produced on one or more external surfaces (20) forming the faces of the lower part (7) with a square cross section.

13. Assembly method according to claim 12, **characterised in that** it is implemented during the assembly of bicycle-wheel spokes on a bicycle wheel, said spokes being provided with an external end thread (9) and forming the part or parts (10) intended to receive the nut (1).

14. Use of a nut (1) provided with a head (3) continued by a barrel (6) an upper part (6A) of which is cylindrical and continues with a lower part (7) with a square cross section and with a thickness less than that of said upper cylindrical part (6A), said nut being provided with an internal thread (2) locally deformed by localised punching on the external surface (20) of the nut (1) by driving back of material, the band (15) thus created being a restriction providing a locking of the threads (14) of the external thread (9) of a part (10) intended to be assembled with said nut (1), said threads (14) providing deformation of the external thread (2) during screwing by driving back and partially tearing the band (15), said at least one localised deformation of the external thread (2) being produced on one or more external surfaces (20) forming the faces of the lower part (7) with a square cross section.
